# EUROPEAN PATENT SPECIFICATION

(11) **EP 3 600 874 B1**
(45) Date of publication and mention of the grant of the patent: **10.04.2024**
(21) Application number: 18772551.0
(22) Date of filing: 19.03.2018
(51) Int. Cl.: C08G 18/09, B29C 44/32, C08G 18/16, C08G 18/22, C08G 18/42, C08G 18/76, C08J 9/14, B32B 37/24, B32B 38/00, B32B 5/20, C08G 18/08

(54) **PROCESS FOR PRODUCING ISOCYANATE-BASED FOAM CONSTRUCTION BOARDS**
VERFAHREN ZUR HERSTELLUNG VON SCHAUMSTOFFBAUPLATTEN AUF ISOCYANATBASIS
PROCÉDÉ DE PRODUCTION DE PANNEAUX DE CONSTRUCTION EN MOUSSE À BASE D'ISOCYANATE

(30) Priority: 20.03.2017 US 201762473752 P; 20.03.2017 US 201762473725 P
(43) Date of publication of application: 05.02.2020
(73) Proprietor: Holcim Technology Ltd, 6300 Zug (CH)
(72) Inventor: LETTS, John B., Carmel, Indiana 46033 (US); YAO, Chunhua, Carmel, Indiana 46033 (US); HUBBARD, Michael J., Murfreesboro, Tennessee 37128 (US)
(74) Representative: Kraus & Lederer PartGmbB
(86) International application number: PCT/US2018/023134
(87) International publication number: WO 2018/175316

(56) References cited:
- EP-A2- 3 095 810
- EP-A2- 3 095 810
- US-A- 5 096 933
- US-A- 5 096 933
- US-A- 5 182 309
- US-A1- 2011 263 732
- US-A1- 2014 094 530
- US-A1- 2015 329 690

## Description

### FIELD OF THE INVENTION

The present invention relates to a process for producing polyisocyanurate construction boards having improved insulating properties.

### BACKGROUND OF THE INVENTION

Polyurethane and polyisocyanurate foam construction boards, which may also be referred to as isocyanate-based construction boards, are commonly employed in the construction industry. For example, these foam insulation boards are commonly employed as insulation within flat or low-sloped roof systems. Isocyanate-based cover boards, which are high density boards, are also employed in many roof systems as a protective layer.

Isocyanate-based construction boards are cellular in nature and typically include an insulating compound trapped within the closed cells of the relatively rigid foam. Many insulating compounds have been used over the years. For example, halogenated hydrocarbons, such as trichlorofluoromethane (CFC-11), were employed. These materials were phased out in favor of hydrochlorofluorocarbons, such as 1,1-dichloro-1-fluoroethane (HCFC-141b). The hydrochlorofluorocarbons were then replaced with hydrocarbons such as various pentane isomers. For example, it is common to produce construction boards by employing n-pentane, isopentane, and/or cyclopentane as blowing agents.

Construction boards are often characterized by one or more technologically important characteristics. For example, the isocyanate-based construction boards may be characterized by an ISO index, which generally refers to the equivalents of NCO groups to isocyanate-reactive groups. Insulation and cover boards having an index of greater than 200 are desirable because these foam construction boards demonstrate improved dimensional stability and better flame resistance than lower index foams.

Another technologically important characteristic is the insulating property of the foam construction board. This characteristic is typically quantified based upon "R-Value." As a skilled person will appreciate, R-Value represents the ability of a given material to resist heat transfer. This resistance can change with the temperature differential being observed, as well as the median temperature. For example, consumer products are often designated with an R-Value measured at a 4.4°C (40 °F) differential and a median temperature of 23.9°C (75 °F); in other words, the insulating value is determined between environments set at 12.8°C (55 °F) and 35°C (95 °F). It is often important to measure R-Value by employing a 4.4°C (40 °F) differential at a 4.4°C (40 °F) median temperature (i.e. between environments set at -6.7°C (20 °F) and 15.6°C (60 °F)). Generally speaking, due to thermodynamic phenomena, R-Value is typically higher at lower median temperatures.

Yet another important characteristic of construction boards is dimensional stability, which generally relates to the ability of the board to maintain its shape and volume when subjected to temperature changes. In other words, dimensional stability relates to the degree to which the boards shrink or warp. This is an important consideration because gaps that are formed between adjacent boards cause thermal shorting and undermine the insulating value of a roof system. As the skilled person appreciates, the dimensional stability of construction boards can be determined by ASTM D-2126-09.

Another important characteristic of construction boards is compressive strength, which generally relates to the force required to compromise a construction board. This is an important factor in several respects. First, where construction boards have inferior compressive strength, the construction boards do not adequately withstand forces that are subjected to a roof surface, which can include environmental forces such as snow and hail, as well as foot traffic that is often experienced on a roof. Additionally, construction boards having inferior compressive strength often produce roof systems having inferior wind uplift ratings. For example, where the construction boards are secured to a roof surface using mechanical fasteners, fastener pull through is inversely proportional to compressive strength. As the skilled person appreciates, compressive strength of construction boards can be determined by ASTM D-1621-10.

Another important characteristic is the friability of the construction board. Where the foam body of the construction board is too friable, the usefulness of the construction board can be compromised. For example, facer adhesion to the foam body can be easily compromised where the foam is too friable. Facer delamination can have an adverse impact on dimensional stability, as well as wind uplift especially where a roofing membrane is adhered to the facer.

It is obviously desirable to increase the insulating ability of the foam construction boards without drastically altering other characteristics of the board. In particular, there is a desire to maintain the insulating properties of construction boards over longer periods of time.

EP 3 095 810 A2 describes a blowing agent composition comprising at least 55%wt of a C₅ alkane, and at least 0.5 %wt of a further alkane and/or an ether. The further alkane is a C₃ alkane, a C₄ alkane and/or a C₆ alkane, which does not comprise a haloalkane, and the ether has the formula R¹OR², wherein R¹ and R² are both independently a C₁ to C₃ alkyl group.

### SUMMARY OF THE INVENTION

The invention provides the process for producing a polyisocyanurate construction board defined in claim 1. Preferred embodiments thereof are defined in the dependent claims.

### BRIEF DESCRIPTION OF THE DRAWINGS

FIG. 1 is a flow chart showing a process of one or more embodiments of the invention.
FIG. 2 is a perspective view of a construction board obtained by the process of one or more embodiments of the present invention.
FIG. 3 is a perspective view of a roofing system including one or more construction boards obtained by practice of one or more embodiments of the present invention.

### DETAILED DESCRIPTION OF ILLUSTRATIVE EMBODIMENTS

Embodiments of the present invention are based, at least in part, on the discovery of a process for producing isocyanate-based construction boards that employs a blowing agent that includes pentane, butane, and a blowing agent additive that has a Hansen Solubility Parameter (δₜ) that is greater than 17 MPa^{-0.5} as defined in claim 1. The pentane, butane and the blowing agent additive are included in the isocyanate-reactive stream of reactants (which is often referred to as the B-side stream), which is then combined with the isocyanate compounds during formation of the foam. Despite what may have been predicted thermodynamically, it has been observed that relatively high index foam construction boards that are prepared by employing aromatic polyester polyols and pentane blowing agents have an R-Value at a 4.4°C (40 °F) median temperature that is lower than the R-Value at a 23.9°C (75 °F) median temperature. In the face of this, it has unexpectedly been found that the use of a blowing agent that consists of pentane, butane, and a blowing agent additive that has a Hansen Solubility Parameter (δₜ) that is greater than 17 MPa^{0.5}, and being selected from the group consisting of ketones, optionally together with a threshold amount of water, the insulating properties of these resultant construction boards can be increased at lower median temperatures (e.g. 4.4°C (40 °F)). Indeed, it is believed that the use of a blowing agent that consists of pentane, butane, and a blowing agent additive that has a Hansen Solubility Parameter (δₜ) that is greater than 17 MPa^{-0.5}, and being selected from the group consisting of ketones, optionally together with a threshold amount of water, leads to a synergistic effect.

### PROCESS OVERVIEW

As suggested above, practice of the present invention includes preparing an isocyanate-based foam by employing blowing agents as defined in claim 1, which consists of pentane, butane, and a blowing agent additive. As a skilled person appreciates, the production of foam may include the use of physical blowing agents as well as chemical blowing agents. Typical chemical blowing agents include water as will be described in greater detail below. Unless otherwise specified, for purposes of this specification, reference to the term blowing agents or blowing agent mixture refers to the physical blowing agents.

As used herein, the term isocyanate-based foam may include polyurethane and polyisocyanurate foams, and terms foam, polyurethane and polyisocyanate may be generally used interchangeably unless specifically indicated. However, the invention only provides a process for producing a polyisocyanurate construction board as defined in claim 1. For example, where a technical distinction must be made between polyurethane and polyisocyanurate foam, the ISO index will be used to make any required technical distinctions.

In one or more embodiments, the foam is prepared by mixing a first stream that includes an isocyanate-containing compound with a second stream that includes an isocyanate-reactive compound. Using conventional terminology, the first stream (i.e., the stream including an isocyanate-containing compound) may be referred to as an A-side stream, an A-side reactant stream, or simply an A stream. Likewise, the second stream (i.e., the stream including an isocyanate-reactive compound) may be referred to as a B-side stream, B-side reactant stream, or simply B stream. In one or more embodiments, either stream may carry additional ingredients including, but not limited to, flame-retardants, surfactants, blowing agents, catalysts, emulsifiers/solubilizers, fillers, fungicides, anti-static substances, and mixtures of two or more thereof.

In one or more embodiments, the blowing agent (i.e. a mixture or the constituents of the mixture), which consists of pentane, butane, and a blowing agent additive as defined in claim 1, is included within the B-side stream of reactants. In other embodiments, the blowing agent, which consists of pentane, butane, and a blowing agent additive as defined in claim 1, is included within both the A-side and B-side stream of reactants.

### A-SIDE STREAM

In one or more embodiments, the A-side stream may only contain the isocyanate-containing compound. In one or more embodiments, multiple isocyanate-containing compounds may be included in the A-side. In other embodiments, the A-side stream may also contain other constituents such as, but not limited to, flame-retardants, surfactants, blowing agents and other non-isocyanate-reactive components. In one or more embodiments, the complementary constituents added to the A-side are non-isocyanate reactive. And, as suggested above, the A-side may include a blowing agent, especially where the blowing agent is non-reactive with the isocyanates. In other embodiments, the A-side is devoid or substantially devoid of the blowing agent.

Suitable isocyanate-containing compounds useful for the manufacture of polyisocyanurate construction board are generally known in the art and embodiments of this invention are not limited by the selection of any particular isocyanate-containing compound. Useful isocyanate-containing compounds include polyisocyanates. Useful polyisocyanates include aromatic polyisocyanates such as diphenyl methane diisocyanate in the form of its 2,4'-, 2,2'-, and 4,4'-isomers and mixtures thereof. The mixtures of diphenyl methane diisocyanates (MDI) and oligomers thereof may be referred to as "crude" or polymeric MDI, and these polyisocyanates may have an isocyanate functionality of greater than 2. Other examples include toluene diisocyanate in the form of its 2,4' and 2,6'-isomers and mixtures thereof, 1,5-naphthalene diisocyanate, and 1,4' diisocyanatobenzene. Exemplary polyisocyanate compounds include polymeric Rubinate 1850 (Huntsmen Polyurethanes), polymeric Lupranate M70R (BASF), and polymeric Mondur 489N (Bayer).

### B-SIDE STREAM

In one or more embodiments, multiple isocyanate-reactive compounds, namely polyols, may be included in the B-side. In other embodiments, the B-side stream may also contain other constituents such as, but not limited to, water, flame-retardants, surfactants and other non-isocyanate-containing components. In particular embodiments, the B-side includes an isocyanate reactive compound, namely a polyol, and the blowing agent as defined in claim 1. In these or other embodiments, the B-side may also include flame retardants, catalysts, emulsifiers/solubilizers, surfactants, fillers, fungicides, anti-static substances, and other ingredients that are conventional in the art.

The isocyanate-reactive compound is a polyol. The term polyol, or polyol compound, includes diols, polyols, and glycols, which may contain water as generally known in the art. Primary and secondary amines are suitable in addition to the polyol, as are polyether polyols and polyester polyols. In particular embodiments, aromatic polyester polyols are employed. Exemplary polyester polyols include phthalic anhydride based PS-2352 (Stepan), phthalic anhydride based polyol PS-2412 (Stepan), teraphthalic based polyol 3522 (Invista), and a blended polyol TR 564 (Huntsman). Useful polyether polyols include those based on sucrose, glycerin, and toluene diamine. Examples of glycols include diethylene glycol, dipropylene glycol, and ethylene glycol. Suitable primary and secondary amines include, without limitation, ethylene diamine, and diethanolamine. In one or more embodiments, a polyester polyol is employed. In one or more embodiments, the present invention may be practiced in the appreciable absence of any polyether polyol. In certain embodiments, the ingredients are devoid of polyether polyols.

### CATALYSTS

Catalysts, which are believed to initiate the polymerization reaction between the isocyanate and the polyol, as well as a trimerization reaction between free isocyanate groups when polyisocyanurate foam is desired, may be employed. While some catalysts expedite both reactions, two or more catalysts may be employed to achieve both reactions. Useful catalysts include salts of alkali metals and carboxylic acids or phenols, such as, for example potassium octoate; mononuclear or polynuclear Mannich bases of condensable phenols, oxo-compounds, and secondary amines, which are optionally substituted with alkyl groups, aryl groups, or aralkyl groups; tertiary amines, such as pentamethyldiethylene triamine (PMDETA), 2,4,6-tris[(dimethylamino)methyl]phenol, triethyl amine, tributyl amine, N-methyl morpholine, and N-ethyl morpholine; basic nitrogen compounds, such as tetra alkyl ammonium hydroxides, alkali metal hydroxides, alkali metal phenolates, and alkali metal acholates; and organic metal compounds, such as tin(II)-salts of carboxylic acids, tin(IV)-compounds, and organo lead compounds, such as lead naphthenate and lead octoate.

### SURFACTANTS, EMULSIFIERS AND SOLUBILIZERS

Surfactants, emulsifiers, and/or solubilizers may also be employed in the production of polyisocyanurate foams in order to increase the compatibility of the blowing agents with the isocyanate and polyol components. Surfactants may serve two purposes. First, they may help to emulsify/solubilize all the components so that they react completely. Second, they may promote cell nucleation and cell stabilization.

Exemplary surfactants include silicone co-polymers or organic polymers bonded to a silicone polymer. Although surfactants can serve both functions, it may also be useful to ensure emulsification/solubilization by using enough emulsifiers/solubilizers to maintain emulsification/solubilization and a minimal amount of the surfactant to obtain good cell nucleation and cell stabilization. Examples of surfactants include Pelron surfactant 9920, Evonik B8489, and GE 6912. U.S. Patent Nos. 5,686,499 and 5,837,742 show various useful surfactants.

Suitable emulsifiers/solubilizers include DABCO Ketene 20AS (Air Products), and Tergitol NP-9 (nonylphenol + 9 moles ethylene oxide).

### FLAME RETARDANTS

Flame Retardants may be used in the production of polyisocyanurate foams, especially when the foams contain flammable blowing agents such as pentane isomers. Useful flame retardants include tri(monochloropropyl) phosphate (a.k.a. tris(cloro-propyl) phosphate), tri-2-chloroethyl phosphate (a.k.a tris(chloro-ethyl) phosphate), phosphonic acid, methyl ester, dimethyl ester, and diethyl ester. U.S. Patent No. 5,182,309 shows useful blowing agents.

### PENTANE BLOWING AGENTS

The pentane component of the blowing agent includes one or more pentane isomers, which will be referred to herein as pentane blowing agents or simply pentane, the pentane component being devoid of cyclopentane. In one or more embodiments, the pentane isomers are selected from n-pentane and isopentane. In particular embodiments, the pentane blowing agent includes a blend of n-pentane and isopentane (in this respect, see U.S. Patent Nos. 7,612,120, 7,838,568, 8,106,106 and 8,453,390).

### BUTANE BLOWING AGENTS

The butane component of the blowing agent includes one or more butane isomers, which will be referred to herein as butane blowing agents, or simply butane. In one or more embodiments, the butane isomers are selected from n-butane, isobutane, and cyclobutane. In particular embodiments, the butane blowing agent includes a blend of n-butane and isobutane.

### BLOWING AGENT ADDITIVE

The blowing agent additive is an organic compound having a Hansen Solubility Parameter (δₜ) that is greater than 17.0, in other embodiments greater than 17.5, in other embodiments greater than 18.0, in other embodiments greater than 18.5, in other embodiments greater than 19.0, and in other embodiments greater than 19.5 MPa^{-0.5} at 25 °C. In these or other embodiments, the blowing agent additive is an organic compound having a Hansen Solubility Parameter (δₜ) of from 17.0 to 35.0, in other embodiments from 17.5 to 33.0, in other embodiments from 18.0 to 30.0, in other embodiments from 18.5 to 28.0, and in other embodiments from 19.0 to 26.0 MPa^{-0.5} at 25 °C.

As the skilled person appreciates, the Hansen Solubility Parameter is based upon empirical evidence relating to the energy from dispersion forces between molecules (δ_{d}), energy from dipolar intermolecular forces between molecules (δₚ), and energy from hydrogen bonds between molecules (δₕ). These components contribute to a Hansen Total Cohesion Parameter (δₜ). Unless otherwise stated, reference to Hansen Solubility Parameter (δₜ) will refer to the Hansen Total Cohesion Parameter. Further explanation and the Hansen Solubility Parameters (δₜ) of many common organic molecules are provided in the HANDBOOK OF SOLUBILITY PARAMETERS AND OTHER COHESION PARAMETERS, CRC Press, Pages 76-121.

In one or more embodiments, the blowing agent additive is also characterized by a boiling point, at one atmosphere, of less than 150 °C, in other embodiments less than 130 °C, in other embodiments less than 115 °C, in other embodiments less than 100 °C, in other embodiments less than 90 °C, and in other embodiments less than 80 °C. In these or other embodiments, the blowing agent additive is also characterized by a boiling point, at one atmosphere, that is greater than 5 °C, in other embodiments greater than 10 °C, in other embodiments greater than 12 °C, in other embodiments greater than 15 °C, and in other embodiments greater than 18 °C. In one or more embodiments, the blowing agent additive is characterized by a boiling point, at one atmosphere, of from 5 °C to 150 °C, in other embodiments from 10 °C to 130°C, in other embodiments from 12 °C to 115 °C, in other embodiments from 15 °C to 100°C, and in other embodiments from 18 °C to 90 °C.

The blowing agent additive is selected from ketones. Further blowing agent additives known in the art comprise aldehydes, ethers, esters, halogenated hydrocarbons, and aromatics. In one or more embodiments, the blowing agent additive is a low molecular weight additive. In one or more embodiments, the blowing agent additive is characterized by a molecular weight of less than 150 g/mole, in other embodiments less than 140 g/mole, in other embodiments less than 130 g/mole, in other embodiments less than 120 g/mole, in other embodiments less than 100 g/mole, in other embodiments less than 90 g/mole, in other embodiments less than 80 g/mole, and in other embodiments less than 70 g/mole.

### KETONES AND ALDEHYDES

Low molecular weight aldehydes or ketones may be defined by one of the following formulae R(CO)R' or R(CO)H, where R and R' are independently a monovalent organic group or where R and R' join to form a divalent organic group.

The monovalent organic groups may be hydrocarbyl groups or substituted hydrocarbyl groups such as, but not limited to, alkyl, cycloalkyl, alkenyl, cycloalkenyl, aryl, allyl, aralkyl, alkaryl, or alkynyl groups. Substituted hydrocarbyl groups include hydrocarbyl groups in which one or more hydrogen atoms have been replaced by a substituent such as a hydrocarbyl group. These groups may also contain heteroatoms such as, but not limited to, nitrogen, boron, oxygen, silicon, sulfur, tin, and phosphorus atoms. In particular embodiments, at least one R group is an ether group, which thereby forms a diether compound.

The divalent organic groups may include hydrocarbylene groups or substituted hydrocarbylene groups such as, but not limited to, alkylene, cycloalkylene, alkenylene, cycloalkenylene, alkynylene, cycloalkynylene, or arylene groups. Substituted hydrocarbylene groups include hydrocarbylene groups in which one or more hydrogen atoms have been replaced by a substituent such as an alkyl group. These groups may also contain one or more heteroatoms such as, but not limited to, nitrogen, oxygen, boron, silicon, sulfur, tin, and phosphorus atoms.

The monovalent organic groups include one to 12 carbon atoms, in other embodiments from one to 6 carbon atoms, or from one to 3 carbon atoms, and further from one to 2 carbon atoms. The divalent organic groups include from one to 12 carbon atoms, or from 2 to 8 carbon atoms, and further 3 to 5 carbon atoms.

Useful ketones include, but are not limited to, acetone, acetophenone, butanone, cyclopentanone, ethyl isopropyl ketone, 2-hexanone, isophorone, mesityl oxide, methyl isobutyl ketone, methyl isopropyl ketone, 3-methyl-2-pentanone, 2-pentanone, 3-pentanone, and methyl ethyl ketone.

Aldehydes include, but are not limited to, formaldehyde, acetaldehyde, propionaldehyde, butyraldehyde, benzaldehyde, cinnamaldehyde, glyoxal, malondialdehyde, and succindialdehyde.

### ESTERS

An ester may be defined by R(CO)OR', where R is hydrogen or a monovalent organic group and R' is a monovalent organic group, or where R and R' join to form a divalent organic group. The monovalent and divalent organic groups are defined above together with their respective size, which definition is applicable.

Esters include, but are not limited to, methyl formate, ethyl formate, n-propyl formate, isopropyl formate, n-butyl formate, isobutyl formate, t-butyl formate, methyl acetate, ethyl acetate, n-propyl acetate, isopropyl acetate, n-butyl acetate, isobutyl acetate, t-butyl acetate, methyl propanoate, ethyl propanoate, n-propyl propanoate, isopropyl propanoate, n-butyl propanoate, isobutyl propanoate, t-butyl propanoate, methyl butanoate, ethyl butanoate, n-propyl butanoate, isopropyl butanoate, n-butyl butanoate, isobutyl butanoate, and t-butyl butanoate.

### AROMATIC HYDROCARBON

Aromatic hydrocarbons include arene and heteroarene compounds. These compounds includes less than 20 carbon atoms, or less than 12 carbon atoms, and further less than 8 carbon atoms.

Arenes include, but are not limited to, benzene, toluene, ethylbenzene, p-1,2-dimethylbenzene, 1,4-dimethylbenzene, 1,4-dimethylbenzene, mesitylene, durene, 2-phenylhexane, biphenyl, phenol, aniline, nitrobenzene, and naphthalene. Heteroarenes include, but are not limited to, azepine, oxepine, theipine, pyridine, pyran, and thiopyran.

### HALOGENATED HYDROCARBONS

An halogenated hydrocarbon may be defined by the general formula RX_{y} where R is a monovalent organic group, each X is independently a halogen atom, and y is the number of halogen atoms within the molecule. X is selected from chlorine and fluorine atoms. y is 1 to 5, or y is 2 to 4, and further y is 2 to 3. The monovalent and divalent organic groups are defined above together with their respective size, which definition is applicable.

An halogenated hydrocarbon is a halogenated methane, also referred to as a halomethane. An halogenated hydrocarbon is a halogenated ethane (haloethane), or a halogenated propane (halopropane). An halogenated hydrocarbon is a halogenated olefin (haloolefin).

Examples of halomethanes include chlorinated methanes such as, but not limited to, chloroform, methyl chloride, 1,2-dicholorethane, and dichloromethane.

### ETHERS

Ethers may be defined by the formula R-OR, where each R is independently a monovalent organic group or each R join to form a divalent organic group. The monovalent and divalent organic groups are defined above together with their respective size, which definition is applicable for this embodiment.

Ethers include dihydrocarbyl ether, diethers, and cyclic ethers. Examples of dihydrocarbyl ethers include, but are not limited to, diethyl ether, dimethylether, diisopropyl ether, diisobutyl ether, di-*n*-propyl ether, di-isoamyl ether, di-*n*-butyl ether, and di-*n*-hexyl either. Examples of cyclic ethers include, but are not limited to, ethylene oxide, tetrahydrofuran (THF), tetrahydropyran, furan, and dihydropyran. Examples of diethers include, but are not limited to, dimethoxymethane, dimethoxyethane, dimethoxypropane, dimethoxyisopropane, diethoxymethane, diethoxyethane, diethoxypropane, diethoxyisopropane, dipropoxymethane, dipropoxyethane, dipropoxypropane, dipropoxyisopropane, and diethylene glycol dimethyl ether.

### AMOUNT OF REACTANTS/INGREDIENTS

An isocyanurate is a trimeric reaction product of three isocyanates forming a six-membered ring. The ratio of the equivalence of NCO groups (provided by the isocyanate-containing compound or A-side) to isocyanate-reactive groups (provided by the isocyanate-containing compound or B side) may be referred to as the index or ISO index. When the NCO equivalence to the isocyanate-reactive group equivalence is equal, then the index is 1.00, which is referred to as an index of 100, and the mixture is said to be stoiciometrically equal. As the ratio of NCO equivalence to isocyanate-reactive groups equivalence increases, the index increases. Above an index of 150, the material is generally known as a polyisocyanurate foam, even though there are still many polyurethane linkages that may not be trimerized. When the index is below 150, the foam is generally known as a polyurethane foam even though there may be some isocyanurate linkages. For purposes of this specification, reference to polyisocyanurate and polyurethane will be used interchangeably unless a specific ISO index is referenced. The process according to the invention produces a polyisocyanurate construction board having an index of at least 220.

The concentration of the isocyanate-containing compound to the isocyanate-reactive compounds within the respective A-side and B-side streams is adjusted to provide the foam product with an ISO index of at least 220, in some embodiments at least 225, in other embodiments at least 230, in other embodiments at least 235, in other embodiments at least 240, in other embodiments at least 245, and in other embodiments at least 250. In these or other embodiments, the concentration of the isocyanate-containing compound to the isocyanate-reactive compounds within the respective A-side and B-side streams is adjusted to provide the foam product with an ISO index of at most 400, in other embodiments at most 350, and in other embodiments at most 300. In one or more embodiments, the concentration of the isocyanate-containing compound to the isocyanate-reactive compounds within the respective A-side and B-side streams is adjusted to provide the foam product with an ISO index of from 220 to 280.

In one or more embodiments, the amount of blowing agent (e.g., pentane, butane, and the blowing agent additive) used in the manufacture of polyisocyanurate foam construction board according to the present invention may be described with reference to the amount of isocyanate-reactive compound employed (e.g., polyol). For example, in one or more embodiments, at least 12, in other embodiments at least 14, and in other embodiments at least 18 parts by weight blowing agent per 100 parts by weight of polyol may be used. In these or other embodiments, at most 40, in other embodiments at most 36, and in other embodiments at most 33 parts by weight blowing agent per 100 parts by weight of polyol may be used. In one or more embodiments, from 12 to 40, in other embodiments from 14 to 36, and in other embodiments from 18 to 33 of blowing agent per 100 parts by weight of polyol may be used.

In one or more embodiments, the amount of blowing agent (e.g., pentane, butane, and blowing agent additive) optionally together with any chemical blowing agent employed, used in the manufacture of polyisocyanurate foam construction board according to the present invention may be described with reference to the density of the resulting foam. In other words, the skilled person appreciates that the amount of blowing agent employed has a direct impact on the density of the foam produced, and these amounts can be determined without undue calculation or experimentation. Accordingly, in one or more embodiments, the amount of blowing agent employed (both physical and chemical blowing agent) is tailored to produce a foam having a density (as determined by ASTM C303-10) of from 1.0 to 40.0 kg/m³ (2.5 lbs/ft³), in other embodiments from 19.2 to 35.2 kg/m³ (1.2 to 2.2 lbs/ft³), in other embodiments from 22.4 to 32.0 kg/m³ (1.4 to 2.0 lbs/ft³), and in other embodiments from 24.0 to 28.2 kg/m³ (1.5 to 1.8 lbs/ft³). In particular embodiments, the amount of blowing agent employed is tailored to produce a foam having a density of less than 40.0 kg/m³ (2.5 lbs/ft³), in other embodiments less than 35.2 kg/m³ (2.2 lbs/ft³), in other embodiments less than 32.0 kg/m³ (2.0 lbs/ft³), and in other embodiments less than 28.8 kg/m³ (1.8 lbs/ft³).

The amount of butane in the physical blowing agent may be described as a mole percentage of the amount of blowing agent. In one or more embodiments, the amount of butane included within the foam-forming ingredients is greater than 5 mole %, in other embodiments greater than 10 mole %, and in other embodiments greater than 13 mole % based upon the entire moles of the physical blowing agent, provided that the blowing agent includes greater than 7 wt % butane based upon the entire weight of the blowing agent. In these or other embodiments, the amount of butane included within the foam-forming ingredients is less than 33 mole %, in other embodiments less than 25 mole %, and in other embodiments less than 20 mole % based upon the entire moles of the physical blowing agent, provided that the blowing agent includes greater than 7 wt % butane based upon the entire weight of the blowing agent. In one or more embodiments, from 5 to 33 mole %, in other embodiments from 7 to 30 mole %, in other embodiments from 10 to 25 mole %, and in other embodiments from 13 to 20 mole % butane, based upon the entire moles of the physical blowing agent, is included within the foam-forming ingredients, provided that the blowing agent includes greater than 7 wt % butane based upon the entire weight of the blowing agent.

The amount of blowing agent additive may be described as a mole percentage of the amount of blowing agent. In one or more embodiments, the amount of blowing agent additive included within the foam-forming ingredients is greater than 5 mole %, in other embodiments greater than 10 mole %, and in other embodiments greater than 12 mole % based upon the entire moles of the physical blowing agent. In these or other embodiments, the amount of blowing agent additive included within the foam-forming ingredients is less than 50 mole %, in other embodiments less than 25 mole %, and in other embodiments less than 20 mole % based upon the entire moles of the physical blowing agent. In one or more embodiments, from 5 to 50 mole %, in other embodiments from 7 to 35 mole %, in other embodiments from 10 to 30 mole %, and in other embodiments from 12 to 27 mole % blowing agent additive, based upon the entire moles of the physical blowing agent, is included within the foam-forming ingredients.

In one or more embodiments, the balance of the physical blowing agent that is not butane or a blowing agent additive is pentane.

The amount of pentane in the blowing agent may be described as a mole percentage of the amount of physical blowing agent. In one or more embodiments, the amount of pentane included within the foam-forming ingredients is greater than 40 mole %, in other embodiments greater than 50 mole %, and in other embodiments greater than 60 mole % based upon the entire moles of the physical blowing agent. In these or other embodiments, the amount of pentane included within the foam-forming ingredients is less than 90 mole %, in other embodiments less than 80 mole %, and in other embodiments less than 70 mole % based upon the entire moles of the physical blowing agent. In one or more embodiments, from 40 to 90 mole %, in other embodiments from 50 to 80 mole %, and in other embodiments from 60 to 70 mole % pentane, based upon the entire moles of the physical blowing agent, is included within the foam-forming ingredients.

The amount of butane may be described as a percentage of the amount of blowing agent employed (in other words, the percentage of the blowing agent that is butane by weight). Thus, the amount of butane included within the foam-forming ingredients is greater than 7 wt %, and in some embodiments greater than 12 wt % based upon the entire weight of the physical blowing agent. In these or other embodiments, the amount of butane included within the foam-forming ingredients is less than 25 wt %, in other embodiments less than 22 wt %, and in other embodiments less than 17 wt % based upon the entire weight of the physical blowing agent. In one or more embodiments, from 7 to 22 wt %, and in other embodiments from 12 to 17 wt % butane, based upon the entire weight of the physical blowing agent, is included within the foam-forming ingredients. It should be understood that these amounts can likewise be employed even where butane introduced directly to the mixhead, as will be explained in greater detail below.

The amount of blowing agent additive may be described as a percentage of the amount of blowing agent employed (in other words, the percentage of the blowing agent that is blowing agent additive by weight). Thus, in one or more embodiments, the amount of blowing agent additive included within the foam-forming ingredients is greater than 5 wt %, in other embodiments greater than 7 wt %, and in other embodiments greater than 12 wt % based upon the entire weight of the physical blowing agent. In these or other embodiments, the amount of blowing agent additive included within the foam-forming ingredients is less than 25 wt %, in other embodiments less than 22 wt %, and in other embodiments less than 17 wt % based upon the entire weight of the physical blowing agent. In one or more embodiments, from 5 to 25 wt %, in other embodiments from 7 to 22 wt %, and in other embodiments from 12 to 17 wt % blowing agent additive, based upon the entire weight of the physical blowing agent, is included within the foam-forming ingredients. It should be understood that these amounts can likewise be employed even where blowing agent additive introduced directly to the mixhead, as will be explained in greater detail below.

The amount of pentane may be described as a percentage of the amount of blowing agent employed (in other words, the percentage of the blowing agent that is pentane by weight). Thus, in one or more embodiments, the amount of pentane included within the foam-forming ingredients is greater than 30 wt %, in other embodiments greater than 40 wt %, and in other embodiments greater than 45 wt % based upon the entire weight of the physical blowing agent. In these or other embodiments, the amount of pentane included within the foam-forming ingredients is less than 95 wt %, in other embodiments less than 90 wt %, and in other embodiments less than 70 wt % based upon the entire weight of the physical blowing agent. In one or more embodiments, from 30 to 95 wt %, in other embodiments from 40 to 90 wt %, and in other embodiments from 45 to 70 wt % pentane, based upon the entire weight of the physical blowing agent, is included within the foam-forming ingredients. It should be understood that these amounts can likewise be employed even where pentane introduced directly to the mixhead, as will be explained in greater detail below.

In one or more embodiments, the amount of the butane may be described as a function of the weight of the polyol. Thus, in one or more embodiments, the amount of butane included within the foam-forming ingredients is greater than 0.9 parts by weight, in other embodiments greater than 2.0 parts by weight, and in other embodiments greater than 3.3 parts by weight per 100 parts by weight polyol. In these or other embodiments, the amount of butane is less than 10.0, in other embodiments less than 8.0, and in other embodiments less than 6.0 parts by weight butane per 100 parts by weight polyol. In one or more embodiments from 0.9 to 10.0, in other embodiments from 2.0 to 8.0, and in other embodiments from 3.3 to 6.0 parts by weight butane per 100 parts by weight polyol is included within the foam-forming ingredients.

The amount of the blowing agent additive may be described as a function of the weight of the polyol. Thus, in one or more embodiments, the amount of blowing agent additive included within the foam-forming ingredients of those embodiments is greater than 0.9 parts by weight, in other embodiments greater than 2.0 parts by weight, and in other embodiments greater than 3.3 parts by weight per 100 parts by weight polyol. In these or other embodiments, the amount of blowing agent additive is less than 10.0, in other embodiments less than 8.0, and in other embodiments less than 6.0 parts by weight blowing agent additive per 100 parts by weight polyol. In one or more embodiments from 0.9 to 10.0, in other embodiments from 2.0 to 8.0, and in other embodiments from 3.3 to 6.0 parts by weight blowing agent additive per 100 parts by weight polyol is included within the foam-forming ingredients within these embodiments.

In one or more embodiments, the amount of the pentane may be described as a function of the weight of the polyol. Thus, in one or more embodiments, the amount of pentane included within the foam-forming ingredients is greater than 8 parts by weight, in other embodiments greater than 12 parts by weight, and in other embodiments greater than 14 parts by weight per 100 parts by weight polyol. In these or other embodiments, the amount of pentane is less than 30, in other embodiments less than 25, and in other embodiments less than 20 parts by weight pentane per 100 parts by weight polyol. In one or more embodiments from 8 to 30, in other embodiments from 12 to 25, and in other embodiments from 14 to 20 parts by weight pentane per 100 parts by weight polyol is included within the foam-forming ingredients.

The amount of the blowing agent additive may be described in terms of a molar ratio of blowing agent additive to the combined moles of butane and pentane, which is defined in terms of the moles of blowing agent additive to the sum of the total moles of butane and pentane. Thus, in one or more embodiments, the molar ratio of blowing agent additive to butane and pentane is greater than 1:20, in other embodiments greater than 1:15, and in other embodiments greater than 1:10. In these or other embodiments, the molar ratio of blowing agent additive to butane and pentane is less than 1:1, in other embodiments less than 1:2, and in other embodiments less than 1:3. In one or more embodiments, the molar ratio of blowing agent additive to butane and pentane is from 1:20 to 1:1, in other embodiments from 1:15 to 1:2, and in other embodiments from 1:10 to 1:3. It should be understood that these amounts can likewise be employed even where the blowing agent additive are introduced directly to the mixhead, as will be explained in greater detail below.

The pentane component of the blowing agent is devoid of cyclopentane.

In one or more embodiments, the physical blowing agent is devoid or substantially devoid of cyclobutane, where substantially devoid refers to that amount or less of cyclobutane that does not have an appreciable impact on the practice of the invention and/or the advantageous properties observed in the construction boards of this invention. In one or more embodiments, the blowing agent employed in practicing the present invention includes less than 10 mole percent, in other embodiments less than 5 mole percent, and in other embodiments less than 1 mole percent cyclobutane based upon the entire blowing agent mixture, which refers to the physical blowing agents (i.e. the pentane, butane, and the blowing agent additive).

In one or more embodiments, the amount of surfactant (e.g., silicone copolymer) used in the manufacture of polyisocyanurate foam construction board according to the present invention may be described with reference to the amount of isocyanate-reactive compound employed (e.g., polyol). For example, in one or more embodiments, at least 1.0, in other embodiments at least 1.5, and in other embodiments at least 2.0 parts by weight surfactant per 100 parts by weight of polyol may be used. In these or other embodiments, at most 5.0, in other embodiments at most 4.0, and in other embodiments at most 3.0 parts by weight surfactant per 100 parts by weight of polyol may be used. In one or more embodiments, from 1.0 to 5.0, in other embodiments from 1.5 to 4.0, and in other embodiments from 2.0 to 3.0 of surfactant per 100 parts by weight of polyol may be used.

In one or more embodiments, the amount of flame retardant (e.g., liquid phosphates) used in the manufacture of polyisocyanurate foam construction board according to the present invention may be described with reference to the amount of isocyanate-reactive compound employed (e.g., polyol). For example, in one or more embodiments, at least 5, in other embodiments at least 10, and in other embodiments at least 12 parts by weight flame retardant per 100 parts by weight of polyol may be used. In these or other embodiments, at most 30, in other embodiments at most 25, and in other embodiments at most 20 parts by weight flame retardant per 100 parts by weight of polyol may be used. In one or more embodiments, from 5 to 30, in other embodiments from 10 to 25, and in other embodiments from 12 to 20 of flame retardant per 100 parts by weight of polyol may be used.

In one or more embodiments, the amount of catalyst(s) employed in practice of the present invention can be readily determined by the skilled person without undue experimentation or calculation. Indeed, the skilled person is aware of the various process parameters that will impact the amount of desired catalyst.

In one or more embodiments, the amount of blowing agent that is employed is sufficient to provide a foam having a foam density (ASTM C303) that is less than 2.5 pounds per cubic foot (12 kg/m²), in other embodiments less than 2.0 pounds per cubic foot (9.8 kg/m²), in other embodiments less than 1.9 pounds per cubic foot (9.3 kg/m²), and still in other embodiments less than 1.8 pounds per cubic foot (8.8 kg/m²). In one or more embodiments, the amount of blowing agent that is employed is sufficient to provide a density that is greater than 1.50 pounds per cubic foot (7.32 kg/m²), or in other embodiments, greater than 1.55 pounds per cubic foot (7.57 kg/m²).

### THRESHOLD AMOUNTS OF WATER

In one or more embodiments, the blowing agent is employed, in accordance with practice of this invention, in combination with threshold amounts of water. In other words, the foam-forming ingredients, or the combination thereof, include the blowing agent and threshold amounts of water. In one or more embodiments, the blowing agent and the threshold amount of water is included within the B-side steam of reactants.

In one or more embodiments, the threshold amount of water includes greater than 0.5, in other embodiments greater than 0.75, and in other embodiments greater than 1.0 parts by weight water per 100 parts by weight polyol. In these or other embodiments, the threshold amount of water includes less than 3.0, in other embodiments less than 2.5, and in other embodiments less than 2.0 parts by weight water per 100 parts by weight polyol. In one or more embodiments, the amount of water included within the included within the B-side stream of reactants is from 0.5 to 3.0, in other embodiments from 0.75 to 2.5, and in other embodiments from 1.0 to 2.0 parts by weight water per 100 parts by weight polyol. It should be understood that these amounts can likewise be employed even where the water is introduced directly to the mixhead.

### METHOD OF MAKING

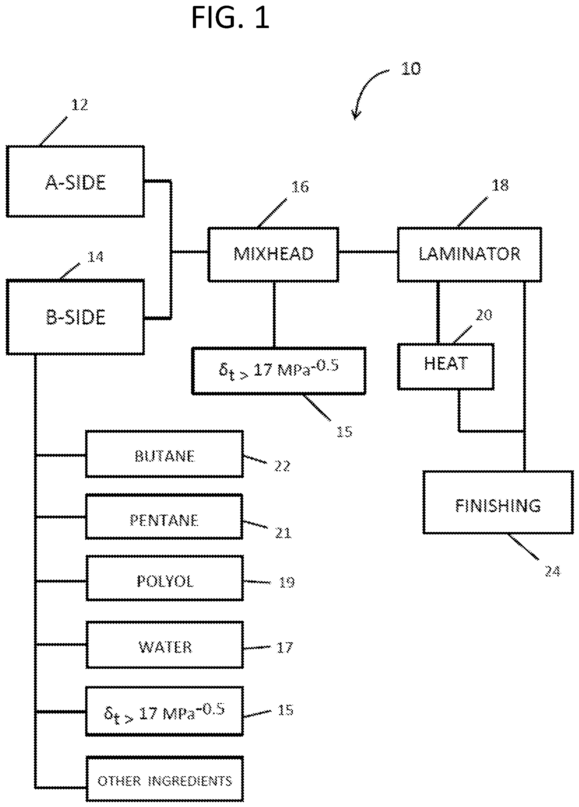

An overview of a process according to embodiments of the present invention can be described with reference to FIG. 1. The process 10 includes providing an A-side stream of reactants 12 and a B-side stream of reactants 14. As described above, the A-side stream of reactants includes an isocyanate-containing compounds and the B-side stream of reactants includes an isocyanate-reactive compound as defined in claim 1. A-side 12 and B-side 14 may be combined at mixhead 16.

In accordance with embodiments of the present invention, pentane 21, butane 22, and ketone blowing agent additive (δₜ > 17 MPa^{-0.5}) 15 is included within the B-side stream. Also, in optional embodiments, a threshold amount of water 17 is included in the B-side. The order in which the ingredients are added in forming the B-side stream can be varied. And, the timing of the addition of the various constituents, such as blowing agent additive 15, can be varied. For example, in one or more embodiments, ketone blowing agent additive (δₜ > 17 MPa^{-0.5}) 15 and optional water 17 can be combined with the polyol 19 within a batch mixer together with one or more of the other ingredients except for butane 22. Once this initial mixture is prepared, butane 22 can be added to the mixture to form the B-side stream. In other embodiments, which are not shown, the butane may be combined with the polyol within a batch mixer together with one or more of the other ingredients except for the pentane. Once this initial mixture is prepared, pentane can be added to the mixture to form the B-side stream. The skilled person will readily appreciate other orders of addition that can be employed. In other embodiments, blowing agent additive 15 can be introduced directly to mixhead 16, where it is simultaneously introduced to the A-side and B-side stream of reactants.

In other embodiments, which are not shown in the Figures, blowing agent additive 15 and the optional amount of water 17 can be introduced directly to mixhead 16, where it is simultaneously introduced to the A-side and B-side stream of reactants.

In one or more embodiments, the pentane and butane of the blowing agent (and optionally the threshold amount of water) is preblended. For example, pentane may be preblended with butane and the blend is then introduced into the process for forming a foam as described herein.

In one or more embodiments, the blowing agent additive is introduced to the B-side stream of reactants by using an in-line continuous mixer at a pressure of less than 3,400 kPa, wherein the blowing agent additive and the polyol component are continuously charged in separate streams advanced at predetermined flow rates chosen to bring about a desired ratio of blowing agent additive to polyol component within the in-line mixer. In one or more embodiments, the blowing agent additive and the polyol are mixed at pressure of a less than 3,400 kPa to dissolve or emulsify the polyol and blowing agent additive within the B-side stream. Methods by which the blowing agent additive may be introduced to the B-side stream include those methods for introducing other constituents to the B-side stream, and in this regard, see U.S. Publ. No. 2004/0082676.

In one or more embodiments, the butane and blowing agent additive, and optional water, are introduced to the B-side stream (i.e. combined with the polyol) prior to introducing the pentane to the B-side stream. In these or other embodiments, the blowing agent additive and optional water are introduced to the B-side stream (i.e. combined with the polyol) after introducing the pentane/and or butane to the B-side stream. In these or embodiments, the blowing agent additive and optional water, are introduced to the B-side stream (i.e. combined with the polyol) simultaneously with the blowing agent (or portion of the blowing agent). As suggested above, in alternate embodiments, which are also not shown in the Figures, the blowing agent additive can be included in the A-side, in combination with addition to the B-side or in addition to inclusion at the mixhead.

The respective streams (12, 14) are mixed within, for example, a mixhead 16 to produce a reaction mixture. Embodiments of the present invention are not limited by the type of mixing or device employed to mix the A-side stream and the B-side stream. In one or more embodiments, the A-side stream of reactants and the B-side stream of reactants may be mixed within an impingement mixhead. In particular embodiments, mixing takes place at a temperature of from 5 to 45 °C. In these or other embodiments, mixing takes place at a pressure in excess of 68,9 bar (1,000 psi), in other embodiments in excess of 103,4 bar (1,500 psi), and in other embodiments in excess of 137,9 bar (2,000 psi).

The mixture is then deposited onto a facer that is positioned within and carried by a laminator 18. While in laminator 18, the reaction mixture rises and can be married to a second facer to form a composite, which may also be referred to as a laminate, wherein the foam is sandwiched between upper and lower facers. The composite, while in laminator 18, or after removal from laminator 18, is exposed to heat source 20, that may be supplied by, for example, an oven. For example, laminator 18 may include an oven or hot air source that heats the slats and side plates of the laminator and there through transfers heat to the laminate (i.e. to the reaction mixture).

Once subjected to this heat, the composite (i.e. the reaction mixture), or a portion of the composite (i.e. reaction mixture) can undergo conventional finishing within a finishing station 24, which may include, but is not limited to, trimming and cutting.

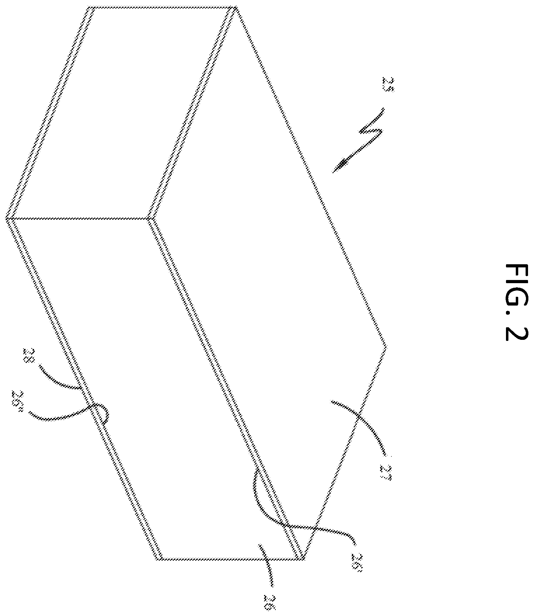

Construction boards produced according to one or more embodiments of the present invention may be described with reference to FIG. 2., which shows a construction board that is indicated generally by the numeral 25. Construction board 25 includes a foam layer 26, which may be referred to as foam core 26, sandwiched between first facer 27 and optional second facer 28. Facers 27 and 28 are attached to foam layer 26 at first planar surface 26' and second planar surface 26", respectively, of foam layer 26. In one or more embodiments, facer 27 (and optionally facer 28) are continuous over the entire planar surface 26' (or planar surface 26") of foam core 26. In one or more embodiments, the butane, pentane, and blowing agent additive are contained within layer 26 either within the cellular structure and/or contained within the cellular walls that form the foam matrix.

### METHOD OF IMPROVING R-VALUE

It should therefore be appreciated that practice of the present invention results in improving the R-Value of rigid, closed-cell polyisocyanurate construction boards, particularly those prepared with aromatic polyester polyols and a pentane blowing agent. The method, which is described herein, includes, at least in part, the inclusion of appropriate amounts of pentane, butane, and a blowing agent additive. In particular, this improvement in R-Value is at lower temperatures relative to the R-Value at higher temperatures. Specifically, the present invention results in improving the R-Value of construction boards at a low median temperature (e.g., 4.4°C (40 °F)) relative to the R-Value at a higher median temperature (e.g., 23.9°C (75 °F)). The R-Value of construction boards at a median temperature of 4.4°C (40 °F) may be improved relative to the R-Value at a median temperature of 23.8°C (75 °F) by at least 1%, in other embodiments by at least 2%, in other embodiments by at least 3%, in other embodiments by at least 4%, in other embodiments by at least 5%, and in other embodiments by at least 6%. The construction boards that are improved according to these embodiments of the invention include rigid, closed-cell polyisocyanurate construction boards having an index of at least 190, a density below 40.0 kg/m³ (2.5 lbs/ft³), and include a butane and pentane blowing agent as defined herein. As the skilled person will appreciate, R-Value can be determined according to ASTM C518-10.

### INDUSTRIAL APPLICABILITY

In one or more embodiments, the construction boards of this invention may be employed in roofing or wall applications. In particular embodiments, the construction boards are used in flat or low-slope roofing system.

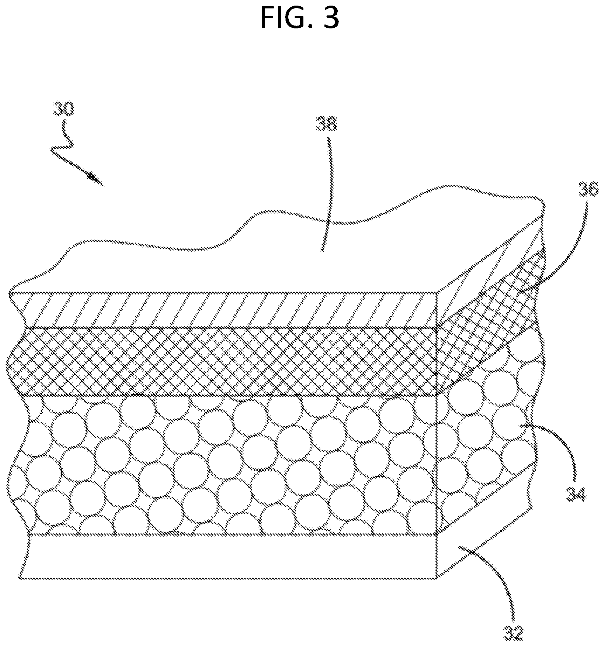

As shown in FIG. 3, roofing system 30 includes a roof deck 32 having insulation board 34, which may be fabricated according to practice of this invention, disposed thereon. An optional high density board 36, which may also be fabricated according to practice of this invention, positioned above, relative to the roof deck, insulation board 34. A water-protective layer or membrane 38 is disposed on top or above high density board 36. In alternate embodiments, not shown, optional high density board 36 may be below insulation board 34 relative to the roof deck.

Practice of this invention is not limited by the selection of any particular roof deck. Accordingly, the roofing systems of this invention can include a variety of roof decks. Exemplary roof decks include concrete pads, steel decks, wood beams, and foamed concrete decks.

Practice of this invention is likewise not limited by the selection of any water-protective layer or membrane. As is known in the art, several membranes can be employed to protect the roofing system from environmental exposure, particularly environmental moisture in the form of rain or snow. Useful protective membranes include polymeric membranes. Useful polymeric membranes include both thermoplastic and thermoset materials. For example, and as is known in the art, membrane prepared from poly(ethylene-co-propylene-co-diene) terpolymer rubber or poly(ethylene-co-propylene) copolymer rubber can be used. Roofing membranes made from these materials are well known in the art as described in U.S. Patent Nos. 6,632,509, 6,615,892, 5,700,538, 5703,154, 5,804,661, 5,854,327, 5,093,206, and 5,468,550. Other useful polymeric membranes include those made from various thermoplastic polymers or polymer composites. For example, thermoplastic olefin (i.e. TPO), thermoplastic vulcanizate (i.e. TPV), or polyvinylchloride (PVC) materials can be used. The use of these materials for roofing membranes is known in the art as described in U.S. Patent Nos. 6,502,360, 6,743,864, 6,543,199, 5,725,711, 5,516,829, 5,512,118, and 5,486,249. In one or more embodiments, the membranes include those defined by ASTM D4637-03 and/or ASTM D6878-03.

Still in other embodiments, the protective membrane can include bituminous or asphalt membranes. In one embodiment, these asphalt membranes derive from asphalt sheeting that is applied to the roof. These asphalt roofing membranes are known in the art as described in U.S. Patent Nos. 6,579,921, 6,110,846, and 6,764,733. In other embodiments, the protective membrane can derive from the application of hot asphalt to the roof.

Other layers or elements of the roofing systems are not excluded by the practice of this invention. For example, and as is known in the art, another layer of material can be applied on top of the protective membrane. Often these materials are applied to protect the protective membranes from exposure to electromagnetic radiation, particularly that radiation in the form of UV light. In certain instances, ballast material is applied over the protective membrane. In many instances, this ballast material simply includes aggregate in the form of rock, stone, or gravel; in this regard, see U.S. Patent No. 6,487,830.

The construction boards obtained according to this invention can be secured to a building structure by using various known techniques. For example, in one or more embodiments, the construction boards can be mechanically fastened to the building structure (e.g., the roof deck). In other embodiments, the construction boards can be adhesively secured to the building structure.

In order to demonstrate the practice of the present invention, the following examples have been prepared and tested. The examples should not, however, be viewed as limiting the scope of the invention. The claims will serve to define the invention.

### EXAMPLES

### SAMPLES 1 - 3 (NOT ACCORDING TO THE INVENTION)

The following foam formulations were made and combined at laboratory scale to produce foam samples that were then tested for various properties, as will be discussed in greater detail below. The foams were prepared from two ingredient mixtures that included an A-side mixture and a B-side mixture. The A-side mixture included a polymeric isocyanate based upon diphenyl methane diisocyanate. The B-side mixture included 100 parts by weight aromatic polyester polyol, about 10 parts by weight liquid flame retardant, about 3 parts by weight metal carboxylate catalyst, about 0.3 parts by weight amine catalyst, about 2 parts by weight surfactant, about 0.25 parts by weight added water, and a physical blowing agent blend that included isopentane, n-pentane, and isobutane or n-butane. The amount of the isobutane and n-butane are provided in Table I. The A-side mixture and the B-side mixture were combined in relative amounts to provide foam having an index of 287. The amount of physical blowing agent, together with the amount of water that was believed to be inherent within the ingredients and the amount of added water, were tailored to provide foams having a density of about 25.6 kg/m³ (1.6 lbs/ft³).

**Table I**

| Samples | 1 | 2 | 3 |
|---|---|---|---|
| Physical Blowing Agent (php) | | | |
| Isopentane/ N-Pentane | 24.00 | 19.50 | 20.70 |
| Isobutane | | 3.50 | |
| N-Butane | | | 3.66 |

| R-Value | | | |
|---|---|---|---|
| 23.9°C (75 °F) | 6.417 | 6.445 | 6.458 |
| 4.4°C (40 °F) | 5.584 | 6.205 | 6.304 |
| % Change (23.9C -->4.4C (75F --> 40F)) | -13.0% | -3.7% | -2.4% |

| Compressive Strength | | | |
|---|---|---|---|
| x-direction (bar (psi)) | 2.14 (31.1) | 2.08 (30.2) | 1.95 (28.3) |
| y-direction (bar (psi)) | 0.986 (14.3) | 0.992 (14.4) | 0.896 (13.0) |

R-value was determined according to ASTM C518. Compression strength was determined according to ASTM D-1621-10.

The data in Table I shows that the inclusion of butane into the physical blowing agent mixture improved the R-Value at a median temperature of 4.4°C (40 °F) relative to the R-Value at a median temperature of 23.9°C (75 °F) over those foams where the physical blowing agent simply included pentane (i.e. Sample 1). This result was highly unexpected.

### SAMPLES 4 -7 (OF WHICH SAMPLES 4 AND 5 ARE NOT ACCORDING TO THE INVENTION)

The following foam formulations were made and combined at laboratory scale to produce foam samples that were then tested for various properties, as will be discussed in greater detail below. The foams were prepared from two ingredient mixtures that included an A-side mixture and a B-side mixture. The A-side mixture included a polymeric isocyanate based upon diphenyl methane diisocyanate. The B-side mixture included aromatic polyester polyol, about 10 parts by weight liquid flame retardant, about 3 parts by weight metal carboxylate catalyst, about 0.3 parts by weight amine catalyst, about 2 parts by weight surfactant, about 0.25 parts by weight added water, and a physical blowing agent blend that included pentane, butane, and a blowing agent additive, where the parts by weight are based upon 100 parts by weight polyol. The amount of the pentane, butane, and the identity and amount of the blowing agent additive are provided in Table II. The A-side mixture and the B-side mixture were combined in relative amounts to provide foam having an index of 287. The amount of physical blowing agent, together with the amount of water that was believed to be inherent within the ingredients and the amount of added water, were tailored to provide foams having a density of about 25.6 kg/m³ (1.6 lbs/ft³).

**Table II**

| Samples | 4 | 5 | 6 | 7 |
|---|---|---|---|---|
| Physical Blowing Agent (php) | | | | |
| Acetone | | 5.00 | 4.10 | 6.40 |
| Acetone (mole%) | | 25 | 15 | 25 |
| Isopentane/ N-Pentane | 24.00 | 18.70 | 17.60 | 15.60 |
| N-Butane | | | 3.11 | 2.75 |

| R-Value | | | | |
|---|---|---|---|---|
| 23.9°C (75 °F) | 6.417 | 6.490 | 6.397 | 6.434 |
| 4.4°C (40 °F) | 5.584 | 6.913 | 6.924 | 7.112 |
| % Change (23.9C --> 4.4C (75F --> 40F)) | -13.0% | 6.5% | 8.2% | 10.5% |

| Compressive Strength | | | | |
|---|---|---|---|---|
| x-direction (bar (psi)) | 2.14 (31.1) | 1.63 (23.6) | 1.76 (25.5) | 1.68 (24.4) |
| y-direction (bar (psi)) | 0.99 (14.3) | 0.79 (11.5) | 0.70 (10.1) | 0.51 (7.4) |

R-value was determined according to ASTM C518. Compression strength was determined according to ASTM D-1621-10.

The data in Table II shows that the inclusion of certain organic compounds having a solubility parameter greater than 17.0 MPa and butane into the physical blowing agent mixture improved the R-Value at a median temperature of 4.4°C (40 °F) relative to the R-Value at a median temperature of 23.9°C (75 °F) over those foams where the physical blowing agent simply included pentane (i.e. Sample 4) or blowing agent additive (i.e. sample 5).

This invention is not limited to the illustrative embodiments set forth herein.

## Claims

1. A process for producing a polyisocyanurate construction board, the process comprising:
(i) providing an A-side reactant stream that includes an isocyanate-containing compound;
(ii) providing a B-side reactant stream that includes a polyol and a blowing agent,
where the blowing agent consists of pentane, butane, a blowing agent additive and optionally a chemical blowing agent,
where the blowing agent additive has a Hansen Solubility Parameter (δₜ)
that is greater than 17 MPa^{-0.5} and is selected from the group consisting of ketones,
where the pentane component of the blowing agent is devoid of cyclopentane, and
where the blowing agent includes greater than 7 wt % butane based upon the entire weight of the blowing agent;
(iii) mixing the A-side reactant stream with the B-side reactant stream to produce a reaction mixture;
(iv) exposing the reaction mixture to heat, where the reaction mixture is deposited onto a facer, and where the reaction is formed into a foam construction board within a laminator, and
(v) where the process produces a construction board having an index of at least 220.

2. The process of claim 1, where the B-side reactant stream includes at least 12 parts by weight blowing agent per 100 parts by weight of polyol, and where the B-side reactant stream includes at most 40 parts by weight blowing agent per 100 parts by weight of polyol.

3. The process of one or more of the preceding claims, where the mole percent of butane in the blowing agent is greater than 5 mole % based upon the entire moles of blowing agent, and where the mole percent of butane in the blowing agent is less than 33 mole % based upon the entire moles of blowing agent.

4. The process of one or more of the preceding claims, where butane component of the blowing agent is selected from n-butane, isobutane, cyclobutane, and combinations thereof.

5. The process of one or more of the preceding claims, where the B-side reactant stream includes at least 0.9 parts by weight blowing agent additive per 100 parts by weight polyol.

6. The process of one or more of the preceding claims, where the B-side reactant stream includes at most 6.0 parts by weight blowing agent additive per 100 parts by weight polyol.

7. The process of one or more of the preceding claims, where the blowing agent additive has a Hansen Solubility Parameter that is greater than 17.5 MPa^{-0.5}.

8. The process of one or more of the preceding claims, where the blowing agent additive has a boiling point, at one atmosphere, of less than 150 °C.

9. The process of one or more of the preceding claims, where the blowing agent additive has a boiling point, at one atmosphere, of from 5 °C to 150 °C.

## Patentansprüche

1. Verfahren zur Herstellung einer Polyisocyanurat-Bauplatte, wobei das Verfahren umfasst:
(i) Bereitstellung eines A-seitigen Reaktantenstroms, der eine isocyanathaltige Verbindung enthält;
(ii) Bereitstellung eines B-seitigen Reaktantenstroms, der ein Polyol und ein Treibmittel enthält,
wobei das Treibmittel aus Pentan, Butan, einem Treibmitteladditiv und gegebenenfalls einem chemischen Treibmittel besteht,
wobei das Treibmitteladditiv einen Hansen-Löslichkeitsparameter (δt) aufweist, der größer als 17 MPa^{-0,5} ist, und aus der Gruppe der Ketone ausgewählt ist,
wobei die Pentankomponente des Treibmittels frei von Cyclopentan ist, und
wobei das Treibmittel mehr als 7 Gew.-% Butan, bezogen auf das Gesamtgewicht des Treibmittels, enthält;
(iii) Mischen des A-seitigen Reaktantenstroms mit dem B-seitigen Reaktantenstrom zur Herstellung eines Reaktionsgemischs;
(iv) Einwirkung von Wärme auf das Reaktionsgemisch, wobei das Reaktionsgemisch auf eine Deckschicht aufgebracht und in einem Laminator zu einer Schaumstoffplatte geformt wird, und
(v) wobei das Verfahren eine Bauplatte mit einem Index von mindestens 220 ergibt.

2. Verfahren nach Anspruch 1, wobei der B-seitige Reaktantenstrom mindestens 12 Gewichtsteile Treibmittel pro 100 Gewichtsteile Polyol enthält und wobei der B-seitige Reaktantenstrom höchstens 40 Gewichtsteile Treibmittel pro 100 Gewichtsteile Polyol enthält.

3. Verfahren nach einem oder mehreren der vorhergehenden Ansprüche, wobei der Molprozentsatz von Butan in dem Treibmittel mehr als 5 Mol-%, bezogen auf die Gesamtmolzahl des Treibmittels, beträgt und wobei der Molprozentsatz von Butan in dem Treibmittel weniger als 33 Mol-%, bezogen auf die Gesamtmolzahl des Treibmittels, beträgt.

4. Verfahren nach einem oder mehreren der vorhergehenden Ansprüche, wobei die Butankomponente des Treibmittels ausgewählt ist aus n-Butan, Isobutan, Cyclobutan und Kombinationen davon.

5. Verfahren nach einem oder mehreren der vorhergehenden Ansprüche, wobei der B-seitige Reaktantenstrom mindestens 0,9 Gewichtsteile Treibmitteladditiv pro 100 Gewichtsteile Polyol enthält.

6. Verfahren nach einem oder mehreren der vorhergehenden Ansprüche, wobei der B-seitige Reaktantenstrom höchstens 6,0 Gewichtsteile Treibmitteladditiv pro 100 Gewichtsteile Polyol enthält.

7. Verfahren nach einem oder mehreren der vorhergehenden Ansprüche, wobei das Treibmitteladditiv einen Hansen-Löslichkeitsparameter aufweist, der größer als 17,5 MPa^{-0,5} ist.

8. Verfahren nach einem oder mehreren der vorhergehenden Ansprüche, wobei das Treibmitteladditiv einen Siedepunkt bei einer Atmosphäre von weniger als 150 °C hat.

9. Verfahren nach einem oder mehreren der vorhergehenden Ansprüche, wobei das Treibmitteladditiv einen Siedepunkt bei einer Atmosphäre von 5 °C bis 150 °C hat.

## Revendications

1. Procédé de fabrication d'un panneau de construction en polyisocyanurate, comprenant :
(i) fournir un flux de réactifs côté A qui comprend un composé contenant de l'isocyanate ;
(ii) fournir un flux de réactifs côté B qui comprend un polyol et un agent gonflant,
où l'agent gonflant est constitué de pentane, de butane, d'un additif d'agent gonflant et éventuellement d'un agent gonflant chimique,
où l'additif de l'agent gonflant a un paramètre de solubilité de Hansen (δt) supérieur à 17 MPa^{-0,5} et est choisi dans le groupe constitué par les cétones,
où le composant pentane de l'agent gonflant est dépourvu de cyclopentane, et
où l'agent gonflant contient plus de 7 % en poids de butane par rapport au poids total de l'agent gonflant ;
(iii) mélanger du flux de réactifs côté A avec le flux de réactifs côté B pour produire un mélange réactionnel ;
(iv) l'exposition du mélange réactionnel à la chaleur, le mélange réactionnel étant déposé sur une plaque de parement et la réaction étant transformée en un panneau de construction en mousse dans un laminateur, et
(v) où le procédé produit un panneau de construction ayant un indice d'au moins 220.

2. Procédé de la revendication 1, dans lequel le flux de réactifs côté B comprend au moins 12 parties en poids d'agent gonflant pour 100 parties en poids de polyol, et dans lequel le flux de réactifs côté B comprend au plus 40 parties en poids d'agent gonflant pour 100 parties en poids de polyol.

3. Procédé d'une ou de plusieurs des revendications précédentes, dans lequel le pourcentage molaire de butane dans l'agent gonflant est supérieur à 5 % molaire par rapport à la totalité des moles d'agent gonflant, et dans lequel le pourcentage molaire de butane dans l'agent gonflant est inférieur à 33 % molaire par rapport à la totalité des moles d'agent gonflant.

4. Procédé de l'une ou de plusieurs des revendications précédentes, dans lequel le composant butane de l'agent gonflant est choisi parmi le n-butane, l'isobutane, le cyclobutane et les combinaisons de ceux-ci.

5. Procédé de l'une ou de plusieurs des revendications précédentes, dans lequel le flux de réactifs côté B comprend au moins 0,9 partie en poids d'additif d'agent gonflant pour 100 parties en poids de polyol.

6. Procédé de l'une ou de plusieurs des revendications précédentes, dans lequel le flux de réactifs côté B comprend au maximum 6,0 parties en poids d'additif d'agent gonflant pour 100 parties en poids de polyol.

7. Procédé de l'une ou de plusieurs des revendications précédentes, dans lequel l'additif d'agent gonflant a un paramètre de solubilité de Hansen supérieur à 17,5 MPa^{-0,5}.

8. Procédé de l'une ou de plusieurs des revendications précédentes, dans lequel l'additif de l'agent gonflant a un point d'ébullition, à une atmosphère, inférieur à 150 °C.

9. Procédé de l'une ou de plusieurs des revendications précédentes, dans lequel l'additif de l'agent gonflant a un point d'ébullition, à une atmosphère, de 5 °C à 150 °C.
